# EUROPÄISCHE PATENTSCHRIFT

(11) **EP 2 264 495 B1**
(45) Veröffentlichungstag und Bekanntmachung des Hinweises auf die Patenterteilung: **18.01.2012**
(21) Anmeldenummer: 10165900.1
(22) Anmeldetag: 14.06.2010
(51) Int. Cl.: B25B 27/10

(54) **Werkzeug zur Verarbeitung von Lichtwellenleitern**
Tool for processing fibre optics
Outil de traitement de conducteurs à fibres optiques

(30) Priorität: 16.06.2009 DE 202009004925 U; 23.07.2009 DE 202009010038 U; 16.04.2010 DE 202010005766 U
(43) Veröffentlichungstag der Anmeldung: 22.12.2010
(73) Patentinhaber: Weidmüller Interface GmbH & Co. KG, 32758 Detmold (DE)
(72) Erfinder: Dierks, Christoph, 32791, Lage-Hörste (DE); Hanning, Günther, 32758, Detmold (DE)
(74) Vertreter: Specht, Peter

(56) Entgegenhaltungen:
- EP-A2- 0 177 205
- EP-A2- 1 273 939
- DE-A1- 19 842 122
- DE-U1-202006 012 869
- US-A- 4 159 793
- US-A1- 2003 113 087
- US-A1- 2004 035 004
- US-B1- 6 230 387

## Beschreibung

Die Erfindung betrifft ein Werkzeug zur Verarbeitung, insbesondere Konfektionierung, von Lichtwellenleitern, mit wenigstens einem oder mehreren Crimpgesenken zum Vercrimpen des wenigstens einen Lichtwellenleiters oder mehrerer Lichtwellenleiter mit Steckern und mit einer Ablängmechanik zum Ablängen von Enden des oder der Lichtwellenleiter.

Derartige Werkzeuge sind an sich bekannt, so aus der DE 198 42 122 C2 oder der DE 100 56 780 A1. Zum Stand der Technik wird ferner die ebenfalls gattungsgemäße US 2004/035004 A1 genannt.

Die bekannten Werkzeuge bedürfen allerdings einerseits hinsichtlich ihrer Handhabung und andererseits hinsichtlich des Schnitts zum Durchtrennen der Lichtwellenleiter der weiteren Optimierung.

Die Lösung dieser Probleme ist die Aufgabe der Erfindung.

Die Erfindung löst diese Aufgabe durch den Gegenstand des Anspruchs 1.

Danach wird das Werkzeug erfindungsgemäß um eine oder beide folgender Funktionen ergänzt:
a) Die Ablängmechanik ist zum Ablängen der Lichtwellenleiter beim oder nach dem Vercrimpen des oder der Lichtwellenleiter bei der gleichen Betätigungsbewegung ausgelegt, mit welcher das Vercrimpen erfolgt, und
b) Der wenigstens eine Lichtwellenleiter ist durch die Ablängmechanik beim Trennschnitt zum Durchtrennen des Lichtwellenleiters oder der Lichtwellenleiter unter Spannung winklig zur Leiterlängsachse in den Steckern gehalten.

Nach dem Merkmal a) wird die Handhabung des Werkzeugs deutlich vereinfacht. Dies ist insbesondere bei einer Ausgestaltung des Werkzeugs als Handzange von Vorteil, da derart mit nur einem Handgriff sowohl das Vercrimpen als auch das Durchtrennen des Leiters oder der Leiters erfolgen.

Nach dem Merkmal b) wird das Ablängen der Lichtwellenleiter besonders sauber durchgeführt, denn die Vorspannung führt zu einem besonders sauberen Trennschnitt.

Dieser Trennschnitt ist in der Regel derart gut, dass in der Regel kein Nachpolieren der Schnittfläche des Lichtwellenleiters mehr erforderlich ist.

Besonders vorteilhaft wirken die beiden je für sich erfinderischen Merkmale a) und b) in Kombination.

Ein besonders vielseitiges Werkzeug wird geschaffen, wenn es Einrichtungen zur Realisierung der Funktionen "Abmanteln der Lichtwellenleiter", "Crimpen der Stecker an die Lichtwellenleiter", "Schneiden der Leichtwellenleiter auf die richtige Länge" und "Vercrimpen einer Zugentlastung an einem Gehäuse zur Aufnahme der Stecker" aufweist.

In der Ausbildung als Handzange weist das Werkzeug zwei relativ zueinander bewegliche Zangengriffe und einen Zangenkopf auf, wobei der Zangenkopf ferner zwei relativ zueinander bewegliche, hier verschwenkbare Verarbeitungsbacken aufweist, die in eine geöffnete und in eine geschlossene Stellung verschwenkbar sind und in ihrem Zusammenspiel dass Zangenmaul ausbilden, wobei in oder an den Verarbeitungsbacken Werkzeuge als Einrichtungen zur Realisierung einer oder mehrerer der vorstehend genannten Funktionen ausgebildet sind.

Es ist besonders zweckmäßig, wenn die Werkzeuge zwei Abmantelungsmesser umfassen, welche seitlich an die Verarbeitungsbacken angesetzt sind und die korrespondierende Schneidbereiche aufweisen, da derart auch die Funktion der Abmantelung mit dem Werkzeug konstruktiv vorteilhaft in das Werkzeug integriert wird und das Abmanteln unproblematisch ausführbar ist.

Weitere vorteilhafte Ausgestaltungen der Erfindung sind den übrigen Unteransprüchen zu entnehmen.

Nachfolgend wird die Erfindung unter Bezug auf die Zeichnung anhand von Ausführungsbeispielen näher beschrieben. Es zeigen:
- Fig. 1a und b: verschiedene perspektivische Ansichten eines als Handzange ausge- bildeten Werkzeugs zur Verarbeitung, insbesondere Konfektionie- rung, von Lichtwellenleitern mit einer Steckvorrichtung;
- Fig. 2a bis d: verschiedene perspektivische Ansichten von Abschnitten der Hand- zange aus Fig. 1;
- Fig. 3a: eine perspektivische Ansicht eines zum Abmanteln von Lichtwellen- leitern ausgelegten Teilbereiches des Werkzeuges aus Fig. 1;
- Fig. 3b - i: die Konfektionierung von Lichtwellenleitern mit einer Steckvorrich- tung;
- Fig. 4: eine perspektivische Ansicht eines weiteren als Handzange ausgebil- deten Werkzeugs zur Verarbeitung, insbesondere Konfektionierung, von Lichtwellenleitern;
- Fig. 5: eine im Vergleich zu Fig. 4 aus einer anderen Position betrachtete per- spektivische Ansicht eines Kopfbereichs der Handzange aus Fig. 4;
- Fig. 6a, b: eine weitere perspektivische Ansicht des Kopfbereiches der Handzan- ge aus Fig. 4 und eine Schnittansicht eines Teilbereichs A des Werk- zeugs aus Fig. 4; und
- Fig. 7a, b: eine weitere perspektivische Ansicht des Kopfbereiches der Handzan- ge aus Fig. 4 und eine Schnittansicht eines Teilbereichs B des Werk- zeugs aus Fig. 4.

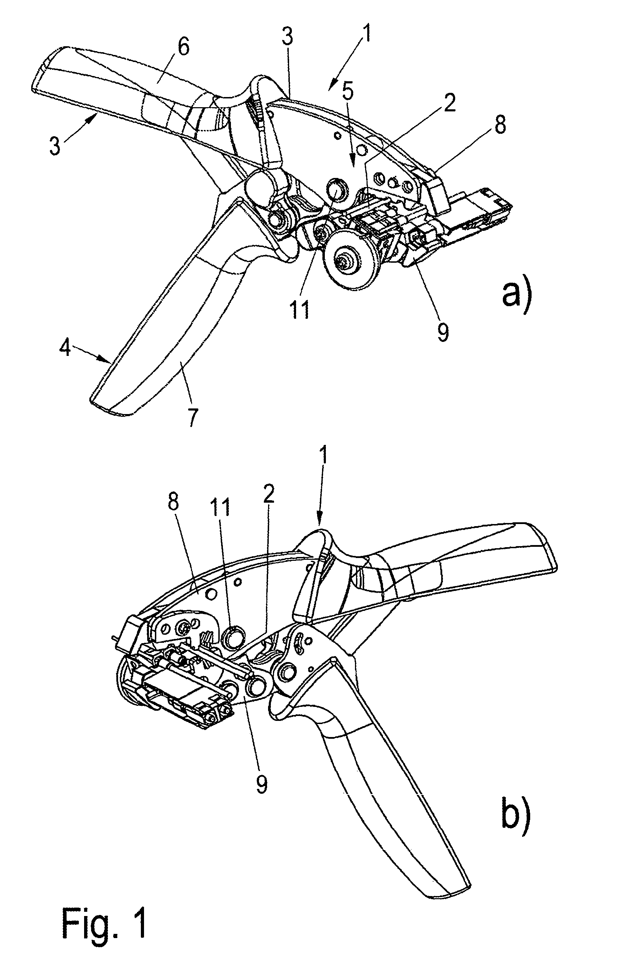

Fig. 1 zeigt ein Werkzeug 1 zur Verarbeitung, insbesondere Konfektionierung, von Lichtwellenleitern 2, insbesondere zur Verarbeitung, insbesondere Konfektionierung, von Polymer Optischen Fasern (POF), die z.B. zur Übertragung von Lichtwellen genutzt werden.

Das Werkzeug ist insbesondere dazu ausgelegt, zwei Lichtwellenleiter 2 mit einer Steckvorrichtung zu konfektionieren (insbesondere sogenannte POF Duplex Lichtwellenleiter und Steckvorrichtungen), wobei eine Besonderheit darin besteht, dass die Konfektionierung mit dem erfindungsgemäßen Werkzeug derart erfolgen kann, dass in der Regel kein nachträgliches Polieren der Lichtwellenleiter-Schnittfläche mehr erforderlich ist.

Das Werkzeug bietet dazu in der in Fig.1 dargestellten bevorzugten Ausgestaltung Einrichtungen zur Realisierung der Funktionen "Abmanteln der POF-Lichtwellenleiter", "Crimpen der Stecker an die POF-Lichtwellenleiter", "Schneiden der POF-Lichtwellenleiter auf die richtige Länge" und "Vercrimpen einer Zugentlastung an dem Stecker". Es sei angemerkt, dass besonders vorteilhaft ist, sämtliche dieser Funktionen in einem Werkzeug zusammenzufassen. Es ist aber im Rahmen der Erfindung nicht zwingend, dass sämtliche dieser Funktionen in nur eine einzige Handzange integriert sind.

Das in Fig. 1 dargestellte Werkzeug 1 ist als Handzange ausgebildet. Es weist zwei relativ zueinander bewegliche Zangengriffe 3, 4 und einen Zangenkopf 5 auf. Die Zangengriffe 3, 4 sind mit Griffschalen 6, 7 versehen.

Der Zangenkopf 5 weist ferner zwei relativ zueinander bewegliche, hier verschwenkbare Verarbeitungsbacken 8, 9 auf, die in eine geöffnete und in eine geschlossene Stellung verschwenkbar sind und in ihrem Zusammenspiel ein Zangenmaul ausbilden.

Im vorliegenden Fall ist eine der Verarbeitungsbacken 8 starr mit einem der Zangengriffe 3 gekoppelt, vorzugsweise einstückig mit diesem ausgebildet

Die andere Verarbeitungsbacke 9 ist dagegen an einem Drehlager 1 1 schwenkbar an der ersten Verarbeitungsbacke 8 gelagert.

Der Zangengriff 3 ist über den Drehpunkt 11 beweglich mit der Klemmbacke 13 verbunden durch welche die Schließ- und Öffnungsbewegung realisiert wird. Angetrieben wird die Klemmbacke durch eine Kniehebelmechanik 12 gebildet aus Schubstrebe 14, Zangengriff 4 und Klemmbacke 13.

Werden die beiden Zangengriffe 3,4 von Hand zusammengedrückt, wirkt der zweite Zangengriff 4 am Drehlager 15 wodurch die Kniehebelmechanik 12 gebildet aus Schubstrebe 14, Zangengriff 4 und Klemmbacke 13 gestreckt wird, so dass die Klemmbacke 13 um das Drehlager 11 geschwenkt wird, was die Verarbeitungsbacken 8, 9 aufeinander zu bewegt, so dass sich das Zangenmaul schließt.

In bzw. an den Verarbeitungsbacken 8, 9 sind verschiedene Werkzeuge ausgebildet.

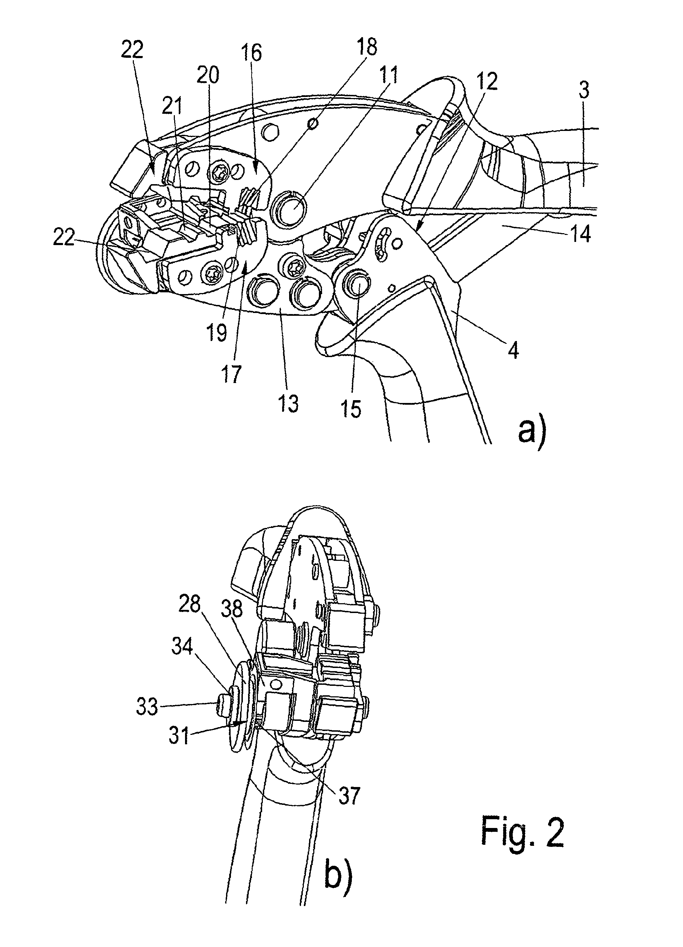

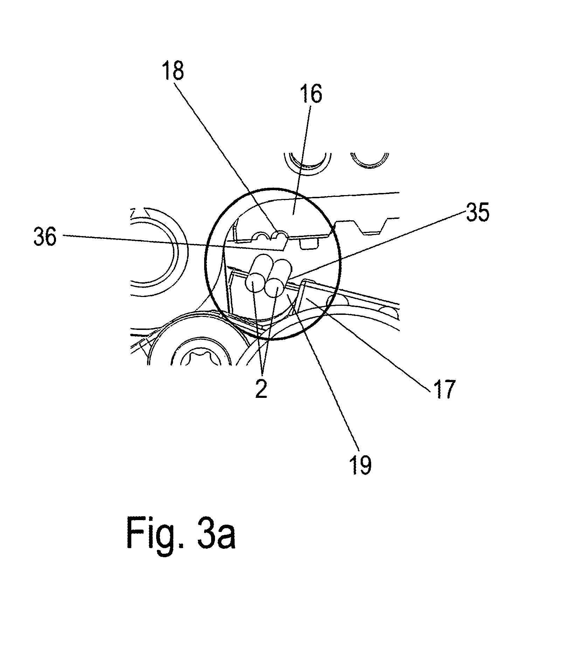

Diese Werkzeuge umfassen zunächst zwei Abmantelungsmesser 16, 17 (siehe Fig. 2a und 3a), welche seitlich an die Verarbeitungsbacken 8, 9 angesetzt sind und die korrespondierende Schneidbereiche 18, 19 aufweisen.

Diese Schneidbereiche 18, 19 sind derart bemessen, dass in Lichtwellenleiter 2, welche in die Schneidbereiche 18, 19 eingelegt sind, ein Schnitt eingebracht wird, der es erlaubt, einen umhüllenden Mantel vor der eigentlichen inneren Glasfaserleitung der Lichtwellenleiter 2 abzuziehen (siehe auch Fig. 3a).

Durch das Schließen des Werkzeugkopfes /-maules werden die Lichtwellenleiter 2 dabei in Führungen 35, 36 im Oberstempel und im Unterstempel bzw. in den Verarbeitungsbacken lagerichtig positioniert und fixiert.

Es ist nicht notwendig, die Lichtwellenleiter 2 auf eine genaue Länge abzumanteln, da das endgültige Abtrennen der Lichtwellenleiter 2 erst beim nachfolgenden Vercrimpvorgang erfolgt, bei dem sie automatisch auf die richtige Länge geschnitten werden.

Dieses endgültige Abtrennen der Lichtwellenleiter 2 erfolgt hier vorteilhaft während der gleichen Schließbewegung des Zangenkopfes, bei der auch das Vercrimpen der Lichtwellenleiterenden erfolgt.

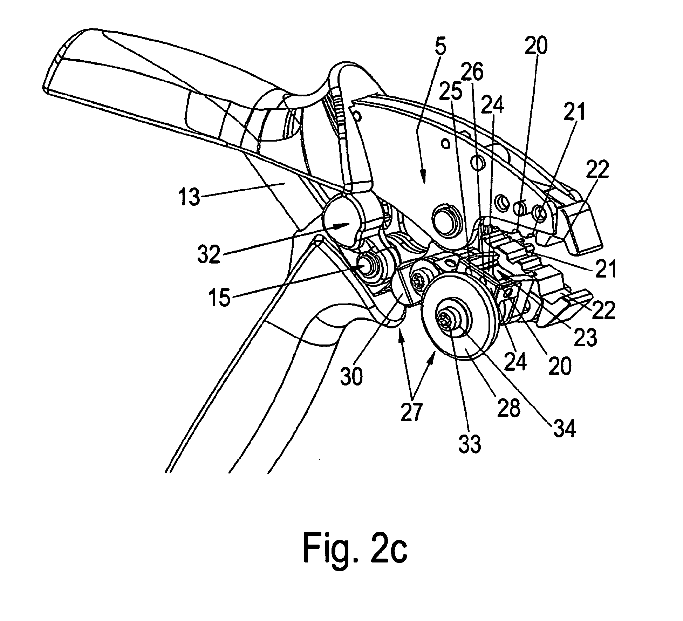

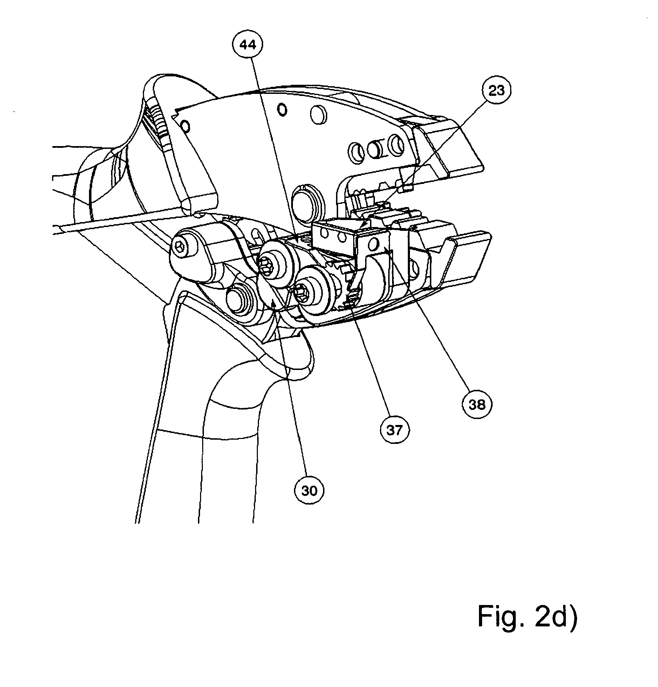

Die Werkzeuge an der Handzange umfassen ferner mehrere Crimpgesenke 20, 21 sowie 22 in den einander zugewandten Flächen der Verarbeitungsbacken 8, 9 (Fig. 2).

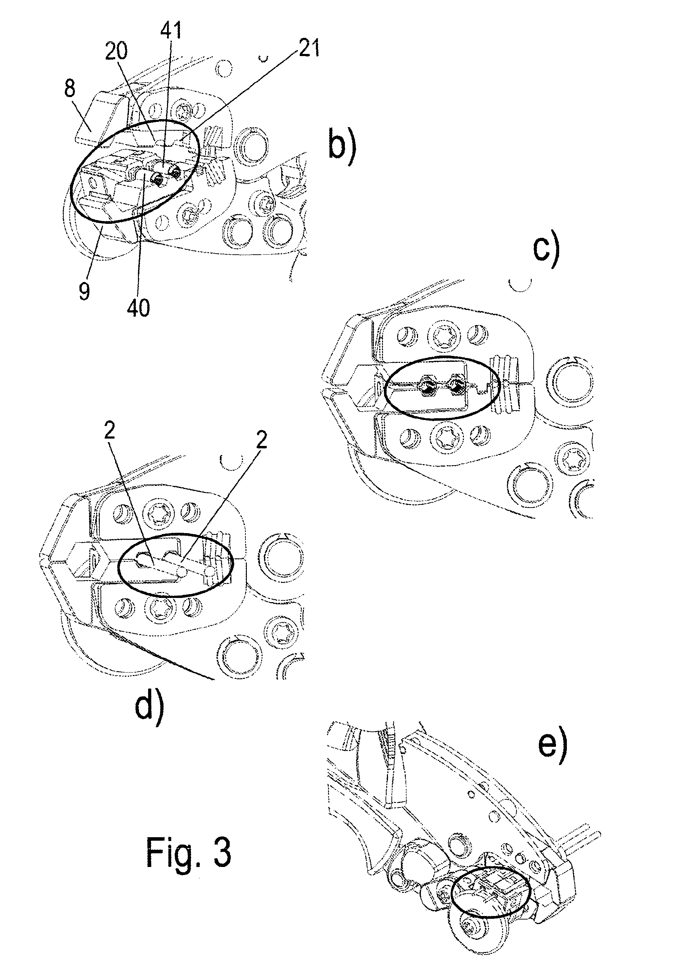

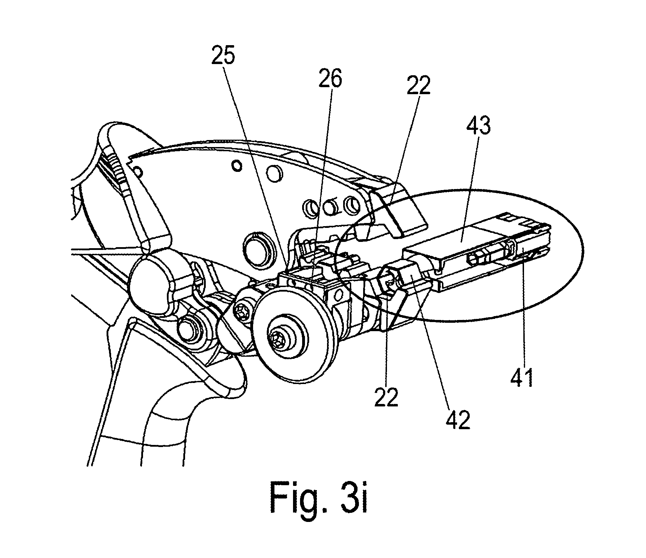

Mit den beiden Crimpgesenken 20 21 werden die beiden Stecker 40, 41 der Steckvorrichtung (siehe Fig. 3b bis 3e) an die Lichtwellenleiter 2 gecrimpt. Dagegen ist das dritte Crimpgesenk 22 dazu vorgesehen, eine Zugentlastungshülse 42 an dem Steckergehäuse 43 zu vercrimpen, in welches die beiden Stecker 40, 41 eingesetzt sind (siehe Fig. 3i).

An der von den Abmantelungsmessern 16, 17 abgewandten Seitenfläche der Verarbeitungsbacken 8, 9 ist an diesen ferner ein Aufnahmebereich 23 zur Aufnahme eines Steckergehäuses ausgebildet, der einen Anschlag 24 aufweist. Dies ergibt sich besonders gut aus Fig. 2c.

Der Anschlag 24 weist eine der Anzahl der zu verarbeitenden Stecker 40, 41 und Lichtwellenleiter 2 entsprechende Anzahl von Durchgangsöffnungen 25, 26 auf.

Der Anschlag 24 ist ferner derart konturiert, dass die beiden Stecker 40, 41 nur in der Lage einlegbar sind, wie sie für die Weiterverarbeitung notwendig ist, da nach dem Crimpen ein Drehen des Steckers 40, 41 um die Lichtwellenleiterachse nicht mehr möglich ist.

Zur Fixierung der Stecker 40, 41 im Werkzeug bzw. in den Crimpgesenken 20, 21 wird dieses leicht geschlossen, sodann werden die beiden Lichtwellenleiter 2 in die Stecker eingeführt, so dass sie vorn aus den Durchgangsöffnungen 25, 26 vorstehen. Durch ein Schließen des Werkzeugs werden sodann die beiden Stecker an die POF-Lichtwellenleiter 2 gecrimpt.

An der vom Anschlag 24 abgewandten Seite dieser Durchgangsöffnungen 25, 26 ist ferner eine Ablängmechanik 27 ausgebildet, die zum Ablängen der Lichtwellenleitern beim bzw. nach dem Vercrimpen mit Hilfe der beiden Crimpgesenke 20, 21 1 dient.

Die Ablängmechanik 27 umfasst eine Andrückscheibe 128, die seitlich beabstandet vom Anschlag 24 montiert ist und eine abgeschrägte Außenumfangsfläche - die Schräge 31 - aufweist (Fig. 2b). Die Druckscheibe 28 kann mit einer Schraube 33 und einer Unterlegscheibe 34 an die untere Arbeitsbacke 9 angeschraubt sein. Die Druckscheibe 28 kann selbst drehbar gelagert sein.

Die Ablängmechanik 27 weist ferner ein Rundmesser 29 auf, welches an einem Hebelarm 30 selbst drehbar gelagert ist und welches durch seine Anordnung am Ende des verschwenkbaren Hebelarmes 30 derart längs eines Kreisbogenabschnittes derart beweglich ist, dass mit ihm aus den Durchgangsöffnungen 25, 26 bei oder nach dem Vercrimpen noch vorstehende Enden der Lichtwellenleiter 2 durchtrennbar sind.

Das Rundmesser 29 ist durch seine Anordnung an dem Hebelarm 30 in einen Spaltbereich (siehe Fig. 2b) zwischen der Druckscheibe 28 und dem Anschlag 24 schwenkbar.

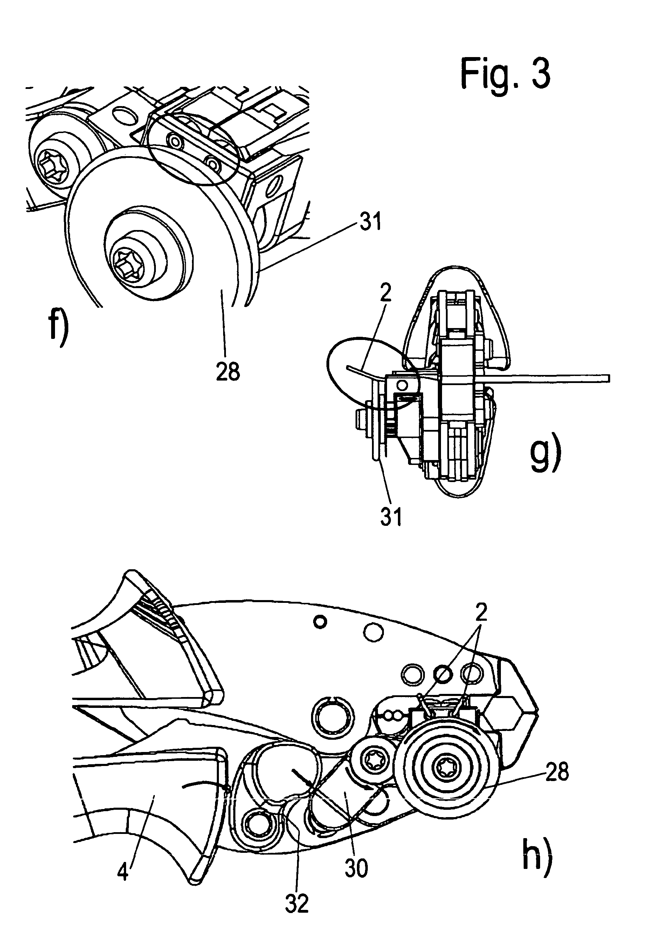

Der Hebelarm 30 wird selbst dadurch verschwenkt, dass auf ihn ein Ende eines Betätigungshebels 32 einwirkt, der fest mit dem Zangengriff verbunden ist und wiederum beim oder nach dem Vercrimpen beim Zusammendrücken der Handgriffe 3, 4 gegen Ende des Crimpvorganges auf den Hebel 30 einwirkt (Fig. 3f, g, h).

Der Handgriff 4 verschwenkt den Betätigungshebel 32 und dieser den Hebel 30 mit dem Rundmesser 29, das derart gegen die durch die Durchgangsöffnungen 25, 26 vorstehenden Enden der Lichtwellenleiter 2 gedrückt wird und diese abtrennt.

Beim Einlegen der Stecker in den Anschlag 24 stößt ein federnd gelagertes Ende der Steckers 40, 41 gegen das Rundmesser 29, so dass die Toleranzen der einzelnen Bauteile der Stecker 40, 41 ausgeglichen werden und die Stecker 40, 41 quasi spielfrei an dem Rundmesser 29 liegen.

Beim Einführen der beiden POF-Lichtwellenleiter 2 in die Stecker 40, 41 stoßen die abgemantelten Lichtwellenleiter 2 an eine umlaufende Schräge 31 der Druckscheibe 28 (Fig. 2b) und gleiten derart an dieser Schräge 31 entlang, dass die POF-Lichtwellenleiter leicht relativ zur Ausrichtung der Leiterlängsachsen in den Steckern 40, 41 in dem Aufnahmebereich 23 abgewinkelt werden (Fig. 3d).

Vorteilhaft ist, dass vor den Durchgangsöffnungen quasi eine Art Hindernis durch die Druckscheibe 28 realisiert wird, welches in Verlängerung der Leiterlängsachse in den Durchgangsöffnungen 25, 26 liegt, so dass die Lichtwellenleiter schräg um dieses Hindernis gelegt werden müssen, was die leichte Vorspannung hervorruft, welche das Schnittbild so deutlich verbessert.

Durch das Abwinkeln der Lichtwellenleiter 2 werden diese unter Spannung gesetzt, woraus beim anschließenden Abtrennen der Lichtwellenleiter 2 eine hervorragende Schnittfläche resultiert, die nicht nachpoliert werden muß. Die Dämpfung in der Schnittstelle ist bereits allein durch den Schnitt weitgehend reduziert.

Das Abtrennen der POF Lichtwellenleiter 2 erfolgt derart für den Benutzer auf einfach handhabbare Weise mit der gleichen Schließbewegung, die zum Vercrimpen der Stecker 40, 41 dient. Der Schnitt verläuft letztendlich wiederum rechtwinklig zum Lichtwellenleiter, damit der Lichtwellenleiter bündig mit dem Stecker abschließt.

Kurz bevor das Werkzeug komplett geschlossen ist, drückt der Betätigungshebel 32 gegen den Hebel 30, wodurch das Rundmesser 29 die überstehenden Lichtwellenleiter 2 bündig am Stecker 40 abtrennt (Fig. 3h).

Während des Abtrennvorgangs wird das Rundmesser 29 angetrieben, wozu eine Antriebsmechanik für das Rundmesser 29 vorgesehen ist.

Diese umfasst hier zumindest eine antreibende Zahnscheibe 37 und eine Sperrklinke 38 (Fig. 2b).

Durch die Zahnscheibe 37 und die Sperrklinke 38 wird das Rundmesser 29 in Rotation versetzt, bis der Schnitt an den Lichtwellenleitern 2 vollzogen ist.

Zur Optimierung der Schnittfläche an den Lichtwellenleitern wird das Rundmesser 29 in eine Rotationsbewegung gebracht (siehe hierzu auch Fig. 2c).

Dies geschieht - siehe Fig. 2d - durch die Schwenkbewegung des Hebelarms 30, der Zahnscheibe und der Sperrklinken 38 und einer zweiten Sperrklinke 44. Die erste Sperrklinke 38 ist fest mit dem Aufnahmebereich 23 verbunden, die Zahnscheibe 37 ist fest mit dem Messer 29 verbunden, die gemeinsam auf einer Achse rotatorisch gelagert sind.

Wird nun der Hebelarm 30 betätigt, drückt die erste Sperrklinke 38 auf die Zahnscheine Pos. 37 und bringt somit das Messer 29 in eine Rotationsbewegung. Die Sperrklinke 44 hindert die Zahnscheibe 37 und damit auch das Rundmesser 29 an einer Rückdrehung, was die vorteilhafte Folge hat, dass das Messer bei jedem Schnitt an einer anderen Stelle benutzt wird.

Das Crimpgesenk 22 für die Zugentlastung ist vorne im Zangenmaul ausgebildet bzw. angeordnet, damit die vormontierte Einheit mit den Komponenten "Stecker 40, 41, Gehäuse 43, Kabel Zugentlastungshülse 42" einfach in das Crimpgesenk 22 eingelegt und aus diesem entnommen werden kann.

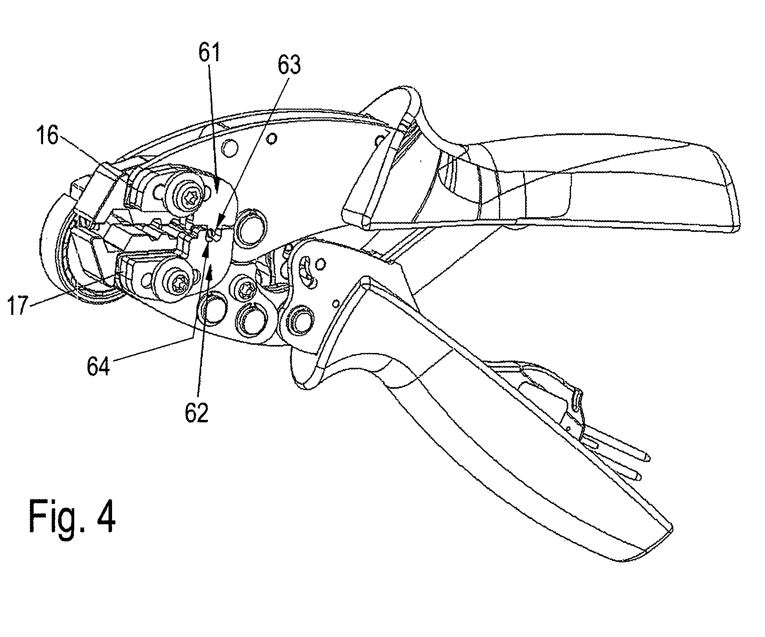

Nach dem Ausfühnmgsbeispiel der Fig. 4 sind zur besseren Führung der Lichtwellenleiter in der Abisolierstation und für ein gleichmäßigeres Einschneiden der Isolierung der Lichtwellenleiter neben den Abmantelungsmessern 16, 17 Fühnmgsplatten 61, 62 angeordnet. Diese Führungsplatten 61, 62 werden beim Abmanteln aneinander gepresst - bis auf Aussparungen 63, 64 welche Durchgangsöffnungen für die Lichtwellenleiter 2 bilden. Die Führungsplatten 61, 62 verbessern die Schnittqualität bei dem Abisolieren, indem sie eine Beschädigung der eigentlichen lichtleitenden Fasern des Lichtwellenleiters verhindern. Darüber hinaus werden die Handkräfte zum Herausziehen des Fasern verringert und es wird eine Beschädigung der Fasern durch die Abmantelungsmesser 16, 17 verhindert.

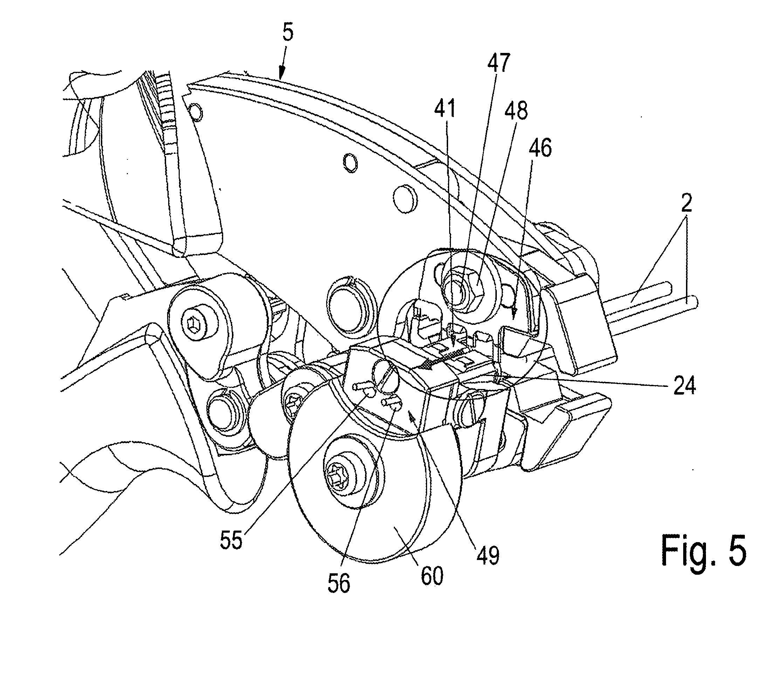

Fig. 5 zeigt ein weiteres vorteilhaftes Detail eines Ausführungsbeispiels einer erfindungsgemäßen Handzange. Dabei ist keine Druckscheibe 28 mehr vorgesehen, um die Schrägstellung des Leiters beim Schnitt zu sichern. Diese Schrägstellung wird vielmehr durch das Messer 29 und eine Führung 49 erreicht.

Diese Handzange ist mit einer Feder 46 versehen, welche am Zangenkopf abgestützt ist.

Hier ist die Feder 46 eine Blattfeder, welche an dem Zangenkopf 5 mit einer Schraube 47 und einer Mutter 48 und ggf. einer Scheibe festgelegt ist. Sie ist auf der Seite des Zangenkopfes 5 angeordnet, auf welcher auch die Ablängmechanik 27 zum Ablängen der Lichtwellenleiter 2 angeordnet ist.

Die Feder 46 ist derart ausgelegt und angeordnet, dass sie beim Schließen der Zange die Stecker 40, 41 in Richtung eines Widerlagers drückt. Hier wird dieses Widerlager durch den Anschlag 24 gebildet.

Derart wird sichergestellt, dass die Lichtwellenleiter an der richtigen axialen Stelle abgelängt werden, da die Stecker 41 definiert an dem Widerlager zur Anlage kommen, gegen welches sie die Feder 46 drückt.

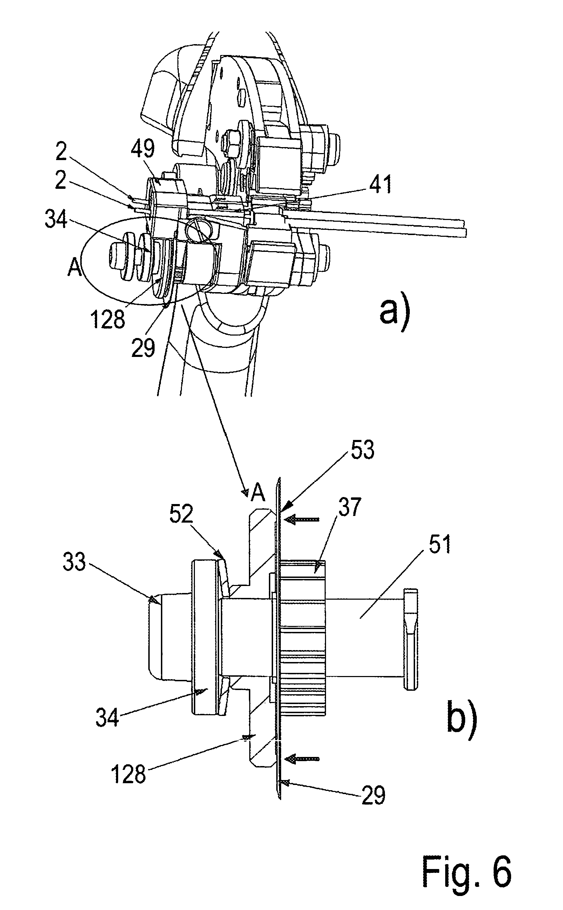

Die Feder 46 hat damit die Wirkung einer automatischen Positionierhilfe für die Stecker 41 (siehe auch Fig. 6a).

Fig. 5 zeigt auch eine Schutzabdeckung 60 insbesondere für das Rundmesser 29.

Nach Fig. 6 weist die modifizierte Ablängmechanik 27 der Fig. 6a, b wiederum ein Rundmesser 29 auf, welches drehbar gelagert ist und antreibbar ist und welches durch seine Anordnung am Ende des verschwenkbaren Hebelarmes 30 derart längs eines Kreisbogenabschnittes derart beweglich ist, dass mit ihm bei oder nach dem Vercrimpen noch vorstehende Enden der Lichtwellenleiter 2 durchtrennbar sind. Der Hebelarm 30 wird wie zu Fig. 3 beschrieben verschwenkt. Gut zu erkennen sind die das Rundmesser drehende bzw. antreibende Zahnscheibe 37 und eine Sperrklinke 38.

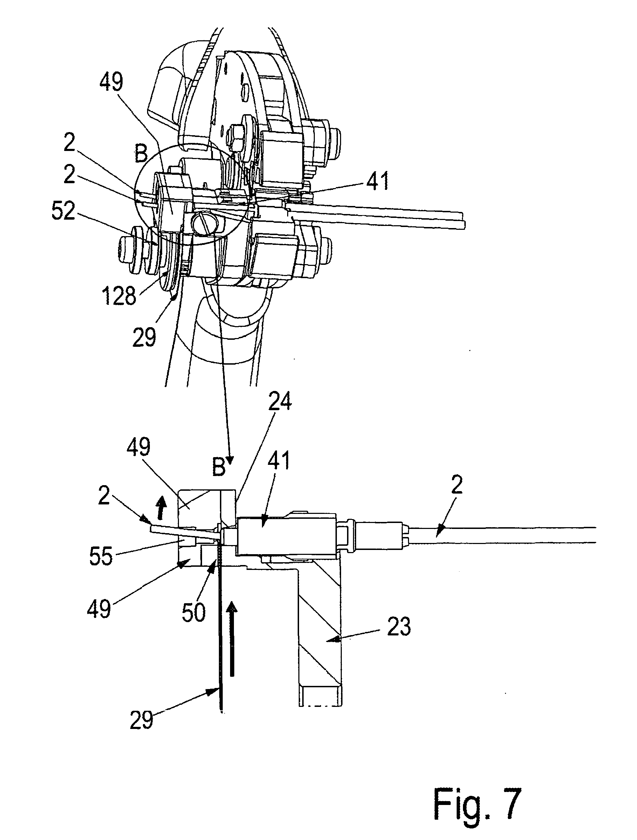

Das Rundmesser 29 ist durch seine Anordnung an dem Hebelarm 30 in einen Spaltbereich (siehe Fig. 7) bzw. eine Aussparung 50 zwischen der Aufnahme 24 und der Führung 49 schwenkbar.

Das Rundmesser 29 liegt direkt an der Zahnscheibe 37 und ist mit dieser drehfest gekoppelt. Auf seiner der Zahnscheibe 37 gegenüber liegenden Seite liegt das Rundmesser 29 an einer Andrückscheibe 128 an. Diese Andrückscheibe 128 weist vorzugsweise einen Durchmesser auf, der nur unwesentlich kleiner ist (vorzugsweise maximal 20% kleiner) als der Durchmesser des Schneidmessers 29.

Zwischen der Schraube 33 und der Andrückscheibe 128 sind vorzugsweise eine Unterlegscheibe 34 und eine Feder, hier eine Federscheibe 52 angeordnet. Die Feder dient dazu, die Andrückscheibe 128 gegen das Rundmesser 29 zu drücken. Die Andrückscheibe 128 weist vorzugsweise einen axialen Bund oder Ansatz 53 auf, welcher als Anlagebereich zum Schneidmesser 29 dient. Derart wird das Schneidmesser als Rundmesser 29 in diesem Bereich exakt geführt (Fig. 6b) und kann beim Schneiden der Lichtwellenleiter 2 nicht ausweichen.

Den eigentlichen Schneidevorgang zeigen Fig. 7a und b.

Fig. 7 veranschaulicht, wie die Stecker 41 mit den Lichtwellenleitern in der Führung 49 einliegen.

Die Führung 49 ist an den Zangenkopf - vorzugsweise an die untere Verarbeitungsbacke 9 - angesetzt und an dieser befestigt oder an diese angeformt. Das Schneidmesser 29 ist relativ zur feststehenden Führung 49 beweglich.

Beispielsweise zwischen dem Anschlag 24 des Aufnahmebereichs 23 und der Führung 49 ist vorteilhaft die Ausnehmung 50 ausgebildet, in welche das Schneidmesser 29 während des Schneidvorgangs eintauchen kann.

Die Führung 49 weist ferner eine der Anzahl zu schneidender Lichtwellenleiter 2 entsprechende Anzahl von Durchgangslöchern 55, 56 (oder Sacklöchern auf).

Die Durchgangslöcher 55, 56 sind vorzugsweise derart gestaltet, dass sie sich in Richtung der freien Enden der Lichtwellenleiter 2 etwas aufweiten. Derart wird die eigentliche Faser der Lichtwellenleiter 2 beim Schneidvorgang 2 vom Rundmesser 29 etwas schräg nach oben gedrückt. Diese leichte Schräglage verhindert ein unkontrolliertes Abknicken des Lichtwellenleiters 2. Damit wird wieder ein leichtes Abwinkeln unter Spannung ermöglicht. Die Schräglage ist damit aber dennoch derart bemessen, dass der eigentliche Schnitt doch genau senkrecht zu Leiterlängsachse erfolgt.

Zur Beschreibung bevorzugter Ausfühnmgsbeispiele sei angemerkt, dass einige bevorzugte Ausgestaltungen auch im Detail beschrieben wurden, dass die Erfindung aber nicht auf diese Ausgestaltungen beschränkt ist sondern im Rahmen der Ansprüche beliebig variiert ausgestaltet werden kann. Insbesondere sind Begriffe wie "oben", "unten", "vorne" oder "hinten" nicht einschränkend zu verstehen sondern beziehen sich lediglich auf die jeweils dargestellte Anordnung. Zudem sind, wenn einzelne Bestandteile erläutert werden, diese - wenn nicht anders erwähnt - grundsätzlich auch in mehrfacher Ausgestaltung denkbar. Unter den Schutzbereich fallen zudem auch funktionale Umkehrungen der dargestellten Anordnungen und Verfahren sowie äquivalente Ausgestaltungen.

### Bezugszeichen

- Werkzeug: 1
- Lichtwellenleiter: 2
- Zangengriffe: 3,4
- Zangenkopf: 5
- Griffschalen: 6, 7
- Verarbeitungsbacken: 8, 9
- Drehlager: 11
- Kniehebelmechanik: 12
- Klemmbacke: 13
- Schubstrebe: 14
- Drehlager: 15
- Abmantelungsmesser: 16, 17
- Schneidbereiche: 18, 19
- Crimpgesenke: 20, 21 sowie 22
- Aufnahmebereich: 23
- Anschlag: 24
- Durchgangsöffnungen: 25, 26
- Ablängmechanik: 27
- Druckscheibe: 28
- Rundmesser: 29
- Hebelarm: 30
- Schräge: 31
- Betätigungshebel: 32
- Schraube: 33
- Unterlegscheibe: 34
- Führungen: 35, 36
- Zahnscheibe: 37
- Sperrklinke: 38
- Stecker: 40, 41
- Zugentlastungshülse: 42
- Steckergehäuse: 43
- Zweite Sperrklinke: 44
- Feder: 46
- Schraube: 47
- Mutter: 48
- Führung: 49
- Aussparung: 50
- Welle: 51
- Federscheibe: 52
- Ansatz: 53
- Durchgangslöcher: 55, 56
- Anlagebereich: 57
- Abdeckung: 60
- Führungsplatten: 61, 62
- Aussparungen: 63, 64
- Andrückscheibe: 128

## Patentansprüche

1. Werkzeug (1) zur Verarbeitung, insbesondere Konfektionierung, von Lichtwellenleitern (2), mit
a. wenigstens einem oder mehreren Crimpgesenken (40,41) zum Vercrimpen des wenigstens einen Lichtwellenleiters oder mehrerer Lichtwellenleiter (2) mit Steckern (40, 41), und
b. einer Ablängmechanik (27) zum Ablängen von Enden des oder der Lichtwellenleiter (2)
**dadurch gekennzeichnet, dass**
c. die Ablängmechanik (27) zum Ablängen der Lichtwellenleiter beim oder nach dem Vercrimpen des oder der Lichtwellenleiter (2) bei der gleichen Betätigungsbewegung ausgelegt ist, mit welcher das Vercrimpen erfolgt, und
d. der wenigstens eine Lichtwellenleiter (2) durch die Ablängmechanik unter Spannung winklig zur Leiterlängsachse in den Steckern (40, 41) gehalten ist.

2. Werkzeug nach Anspruch 1, **dadurch gekennzeichnet, dass** das Werkzeug als Handzange mit einem Zangenmaul ausgebildet ist und dass es derart ausgebildet ist, dass das Ablängen mit der gleichen Handbewegung erfolgt, bei welcher auch das Vercrimpen der Stecker (40, 41) an den Lichtwellenleitern (2) erfolgt.

3. Werkzeug nach einem der vorstehenden Ansprüche, **dadurch gekennzeichnet, dass** es Einrichtungen zur Realisierung der Funktionen "Abmanteln der Lichtwellenleiter", "Crimpen der Stecker an die Lichtwellenleiter", "Schneiden der Leichtwellenleiter auf die richtige Länge" und "Vercrimpen einer Zugentlastung an einem Gehäuse zur Aufnahme der Stecker" aufweist.

4. Werkzeug nach einem der vorstehenden Ansprüche, **dadurch gekennzeichnet, dass** es in der Ausbildung als Handzange (5) zwei relativ zueinander bewegliche Zangengriffe (3, 4) und einen Zangenkopf (5) aufweist und dass der Zangenkopf (5) ferner zwei relativ zueinander bewegliche, hier verschwenkbare Verarbeitungsbacken (8, 9) aufweist, die in eine geöffnete und in eine geschlossene Stellung verschwenkbar sind und in ihrem Zusammenspiel dass Zangenmaul ausbilden, wobei in oder an den Verarbeitungsbacken (8, 9) Werkzeuge als Einrichtungen zur Realisierung einer oder mehrerer der vorstehend genannten Funktionen ausgebildet sind.

5. Werkzeug nach einem der vorstehenden Ansprüche, **dadurch gekennzeichnet, dass** die Werkzeuge zwei Abmantelungsmesser (16, 17) aufweisen, welche seitlich an die Verarbeitungsbacken (8, 9) angesetzt sind.

6. Werkzeug nach einem der vorstehenden Ansprüche, **dadurch gekennzeichnet, dass** die Werkzeuge an der Handzange mehrere Crimpgesenke (20, 21 sowie 22) in den einander zugewandten Flächen der Verarbeitungsbacken (8, 9) aufweisen und/oder dass mit den beiden Crimpgesenken (20 21) die beiden Stecker (40, 41) der Steckvorrichtung an die Lichtwellenleiter (2) crimpbar sind und dass das dritte Crimpgesenk (22) dazu vorgesehen ist, eine Zugentlastungshülse (42) an das Steckergehäuse (43) zu crimpen, in welches die beiden Stecker (40, 41) eingesetzt sind.

7. Werkzeug nach einem der vorstehenden Ansprüche, **dadurch gekennzeichnet, dass** an einer der Verarbeitungsbacken (8, 9) ferner ein Aufnahmebereich (23) zur Aufnahme der Steckergehäuses (40, 41) ausgebildet ist, der einen Anschlag (24) aufweist, welcher eine der Anzahl der zu verarbeitenden Stecker (40, 41) und Lichtwellenleiter (2) entsprechende Anzahl von Durchgangsöffnungen (25, 26) aufweist.

8. Werkzeug nach einem der vorstehenden Ansprüche, **dadurch gekennzeichnet, dass** der Anschlag (24) ferner derart konturiert ist, dass die beiden Stecker (40, 41) nur in definierter Lage einlegbar sind und/oder dass die Ablängmechanik an der vom Anschlag (24) abgewandten Seite der Durchgangsöffnungen (25, 26) ausgebildet ist.

9. Werkzeug nach einem der vorstehenden Ansprüche, **dadurch gekennzeichnet, dass** die Ablängmechanik (27) zum Ablängen der Lichtwellenleitern beim bzw. nach dem Vercrimpen mit Hilfe der beiden Crimpgesenke (20, 21) ausgelegt ist.

10. Werkzeug nach einem der vorstehenden Ansprüche, **dadurch gekennzeichnet, dass** die Ablängmechanik folgendes aufweist:
a. eine Druckscheibe (28) oder eine Führung (49), seitlich eines
b. Messers (29) zum Ablängen der Lichtwellenleiter beim Vercrimpen.

11. Werkzeug nach einem der vorstehenden Ansprüche, **dadurch gekennzeichnet, dass** das Messer als angetriebenes Rundmesser (29) ausgelegt ist, welches an einem Hebelarm (30) drehbar gelagert ist und welches durch seine Anordnung am Ende des verschwenkbaren Hebelarmes (30) derart beweglich ist, dass mit ihm aus den Durchgangsöffnungen (25, 26) bei oder nach dem Vercrimpen noch vorstehende Enden der Lichtwellenleiter (2) durchtrennbar sind.

12. Werkzeug nach einem der vorstehenden Ansprüche, **dadurch gekennzeichnet, dass** der Hebelarm durch eine Hebelmechanik bei einem Vercrimpen der Stecker an den Lichtwellenleitern (2) in den Spalt zwischen der Druckscheibe (28) und dem Anschlag (24) schwenkbar ist.

13. Werkzeug nach einem der vorstehenden Ansprüche, **dadurch gekennzeichnet, dass** es mit einer Feder (46) versehen ist, welche derart ausgelegt und angeordnet ist, dass sie beim Schließen der Zange den oder die Stecker (40, 41) in Richtung eines Widerlagers, insbesondere einer Aufnahme (24) drückt.

14. Werkzeug nach einem der vorstehenden Ansprüche, **dadurch gekennzeichnet, dass** eine Andrückscheibe (128) vorgesehen ist, welche wenigstens einen axialen Bund oder Ansatz (53) aufweist, welcher als Anlagebereich zum Schneidmesser (29) dient.

15. Werkzeug nach einem der vorstehenden Ansprüche, **dadurch gekennzeichnet, dass** das Schneidmesser (29) relativ zur Führung (49) beweglich ist und das eine Ausnehmung (50) oder ein Schlitz, insbesondere zu der Führung (24) hin, vorgesehen ist, in welchen das Schneidmesser (29) während des Schneidvorgangs eintauchen kann und/oder dass die Führung (49) wenigstens eine oder mehr, insbesondere eine der Anzahl zu schneidender Lichtwellenleiter (2) entsprechende Anzahl von Durchgangslöchern (55, 56) oder Sacklöchern zum Einstecken der Lichtwellenleiter (2) aufweist.

16. Werkzeug nach einem der vorstehenden Ansprüche, **dadurch gekennzeichnet, dass** die Durchgangslöcher (55, 56) vorzugsweise derart gestaltet sind, dass sie sich in Richtung der freien Enden der Lichtwellenleiter (2) aufweiten, so dass die Lichtwellenleiter (2) beim Schneidvorgang (2) schräg gedrückt werden.

## Claims

1. Tool (1) for processing, in particular assembling, fibre optics, having
a. at least one or more crimping dies (40, 41) for crimping the at least one fibre optic or a plurality of fibre optics (2) with plugs (40, 41), and
b. a cutting mechanism (27) for cutting ends of the fibre optic(s),
**characterised in that**
c. the cutting mechanism is designed to cut the fibre optics during or after crimping of the fibre optic (s) in the same actuation movement with which the crimping takes place, and
d. the at least one fibre optic (2) is held by the cutting mechanism under tension at an angle to the conductor longitudinal axis in the plugs (40, 41).

2. Tool according to claim 1, **characterised in that** the tool is formed as hand pliers with a pliers mouth and **in that** it is formed so that the cutting takes place with the same hand movement as also takes places for the crimping of the plugs (40, 41) on the fibre optics (2).

3. Tool according to one of the preceding claims, **characterised in that** it comprises devices for realising the functions "strip the fibre optics", "crimp the plugs on the fibre optics", "cut the fibre optics to the right length" and "crimp a strain relief on a housing for receiving the plugs".

4. Tool according to one of the preceding claims, **characterised in that** it comprises in the design as hand pliers (5) two pliers grips (3, 4) which can be moved relative to each other and a pliers head (5) and **in that** the pliers head (5) further comprises two machining jaws (8, 9) which can be moved relative to each other, being pivotable here, which can be pivoted into an open and a closed position and form the pliers mouth in their interplay, wherein tools are formed in or on the machining jaws (8, 9) as devices for realising one or more of the abovementioned functions.

5. Tool according to one of the preceding claims, **characterised in that** the tools comprise two stripping blades (16, 17) which are arranged laterally against the machining jaws (8, 9).

6. Tool according to one of the preceding claims, **characterised in that** the tools comprise on the hand pliers a plurality of crimping dies (20, 21 and 22) in the areas of the machining jaws (8, 9) facing each other and / or **in that** with the two crimping dies (20, 21) the two plugs (40, 41) of the plug device can be crimped against the fibre optics (2) and the third crimping die (22) is provided to crimp a strain relief sleeve (42) against the plug housing (43), into which the two plugs (40, 41) are inserted.

7. Tool according to one of the preceding claims, **characterised in that** a receiving area (23) is further formed on one of the machining jaws (8, 9) for receiving the plug housing (40, 41), which receiving area (23) comprises a stop (24) which comprises a number of passage openings (25, 26) corresponding to the number of plugs (40, 41) and fibre optics (2) to be processed.

8. Tool according to one of the preceding claims, **characterised in that** the stop (24) is further contoured so that the two plugs (40, 41) can only be laid in a defined position and / or the cutting mechanism is formed on the side of the passage openings (25, 26) facing away from the stop (24).

9. Tool according to one of the preceding claims, **characterised in that** the cutting mechanism (27) is designed to cut the fibre optics during or after crimping with the aid of the two crimping dies (20, 21).

10. Tool according to one of the preceding claims, **characterised in that** the cutting mechanism comprises the following:
a. a pressure plate (28) or a guide (49), to the side of a
b. blade (29) for cutting the fibre optics during crimping.

11. Tool according to one of the preceding claims, **characterised in that** the blade is designed as a driven round blade (29) which is rotationally mounted on a lever arm (30) and which can be moved through its arrangement at the end of the pivotable lever arm (30) in such a way that it is possible with it to cut through ends of the fibre optics (2) still projecting during or after crimping from the passage openings (25, 26).

12. Tool according to one of the preceding claims, **characterised in that** the lever arm can be pivoted through a lever mechanism during crimping of the plugs on the fibre optics (2) into the gap between the pressure plate (28) and the stop (24).

13. Tool according to one of the preceding claims, **characterised in that** it is provided with a spring (46) which is designed and arranged so that upon closing the pliers it presses the plug(s) (40, 41) towards an abutment, in particular a receiving element (24).

14. Tool according to one of the preceding claims, **characterised in that** a pressure plate (128) is provided which comprises at least one axial collar or attachment (53) which serves as an abutment region in relation to the cutting blade (29).

15. Tool according to one of the preceding claims, **characterised in that** the cutting blade (29) can be moved relative to the guide (49) and the one recess (50) or slot, in particular towards the guide (24), is provided, into which the cutting blade (29) can be inserted during the cutting process and / or **in that** the guide (49) comprises at least one or more, in particular a number of passage holes (55, 56) or blind holes, corresponding to the number of fibre optics (2) to be cut, for inserting the fibre optics (2).

16. Tool according to one of the preceding claims, **characterised in that** the passage holes (55, 56) are preferably designed in such a way that they widen in the direction of the free ends of the fibre optics (2) so that the fibre optics (2) are pressed in an inclined manner during the cutting process (2).

## Revendications

1. Outil (1) pour la transformation, en particulier le surmoulage, de guides d'ondes optiques (2), comprenant
a. au moins une ou plusieurs matrices de sertissage (40, 41) pour sertir ledit au moins un guide d'ondes optiques ou plusieurs guides d'ondes optiques (2) avec des connecteurs (40, 41), et
b. un mécanisme de sectionnement (27) pour couper à longueur des extrémités du ou des guides d'ondes optiques (2),
**caractérisé en ce que**
c. le mécanisme de sectionnement (27) pour couper à longueur les guides d'ondes optiques est configuré pour présenter le même mouvement d'actionnement pendant ou après le sertissage du ou des guides d'ondes optiques (2) que celui par lequel s'effectue le sertissage, et
d. le mécanisme de sectionnement maintient ledit au moins un guide d'ondes optiques (2) dans les connecteurs (40, 41) sous tension sous un angle par rapport à l'axe longitudinal du guide.

2. Outil selon la revendication 1, **caractérisé en ce que** l'outil est réalisé comme une pince manuelle munie d'un bec de pince, et **en ce qu'**il est réalisé de telle sorte que le sectionnement s'effectue par le même mouvement de la main que celui par lequel s'effectue également le sertissage des connecteurs (40, 41) sur les guides d'ondes optiques (2).

3. Outil selon l'une quelconque des revendications précédentes, **caractérisé en ce qu'**il présente des dispositifs pour réaliser les fonctions « dénudage des guides d'ondes optiques », « sertissage des connecteurs sur les guides d'ondes optiques », « découpage des guides d'ondes optiques à la bonne longueur » et « sertissage d'un dispositif de décharge de traction sur un boîtier destiné à recevoir les connecteurs ».

4. Outil selon l'une quelconque des revendications précédentes, **caractérisé en ce que** dans la version de pince manuelle (5), il présente deux poignées de pince (3, 4) mobiles l'une par rapport à l'autre, et une tête de pince (5), et **en ce que** la tête de pince (5) présente en outre deux mâchoires de transformation (8, 9) mobiles l'une par rapport à l'autre, ici pivotantes, qui peuvent pivoter dans une position ouverte et dans une position fermée, et qui constituent en conjonction le bec de la pince, dans lequel, dans ou sur les mâchoires de transformation (8, 9), des outils sont réalisés comme des dispositifs permettant de réaliser une ou plusieurs des fonctions mentionnées précédemment.

5. Outil selon l'une quelconque des revendications précédentes, **caractérisé en ce que** les outils présentent deux couteaux à dénuder (16, 17) qui sont appliqués latéralement au niveau des mâchoires de transformation (8, 9).

6. Outil selon l'une quelconque des revendications précédentes, **caractérisé en ce que** les outils présentent au niveau de la pince manuelle plusieurs matrices de sertissage (20, 21 et 22) dans les surfaces, tournées l'une vers l'autre, des mâchoires de transformation (8, 9) et/ou **en ce que** les deux matrices de sertissage (20, 21) permettent de sertir les deux connecteurs (40, 41) du dispositif enfichable sur les guides d'ondes optiques (2), et **en ce que** la troisième matrice de sertissage (22) est prévue pour sertir une douille de décharge de traction (42) sur le boîtier de connecteur (43) dans lequel sont placés les deux connecteurs (40, 41).

7. Outil selon l'une quelconque des revendications précédentes, **caractérisé en ce qu'**en outre, sur l'une des mâchoires de transformation (8, 9), une zone de réception (23) est réalisée pour recevoir le boîtier de connecteur (40, 41) qui présente une butée (24) qui présente un nombre de trous traversants (25, 26) correspondant au nombre des connecteurs (40, 41) et des guides d'ondes optiques (2) à transformer.

8. Outil selon l'une quelconque des revendications précédentes, **caractérisé en ce que** la butée (24) est en outre profilée de telle sorte que les deux connecteurs (40, 41) peuvent être mis en place uniquement dans une certaine position et/ou **en ce que** le mécanisme de sectionnement est réalisé du côté des trous traversants (25, 26) détourné de la butée (24).

9. Outil selon l'une quelconque des revendications précédentes, **caractérisé en ce que** le mécanisme de sectionnement (27) est conçu pour couper à longueur les guides d'ondes optiques pendant ou après le sertissage à l'aide des deux matrices de sertissage (20, 21).

10. Outil selon l'une quelconque des revendications précédentes, **caractérisé en ce que** le mécanisme de sectionnement présente:
a. une rondelle de pression (28) ou un dispositif de guidage (49), latéralement par rapport à un
b. couteau (29) pour couper à longueur les guides d'ondes optiques pendant le sertissage.

11. Outil selon l'une quelconque des revendications précédentes, **caractérisé en ce que** le couteau est conçu comme un couteau circulaire (29) entraîné, qui est monté pivotant sur un bras de levier (30) et qui est mobile grâce à son agencement à l'extrémité du bras de levier pivotant (30) de telle sorte qu'il permet de sectionner des extrémités des guides d'ondes optiques (2) qui dépassent toujours des trous traversants (25, 26) pendant ou après le sertissage.

12. Outil selon l'une quelconque des revendications précédentes, **caractérisé en ce que** le bras de levier peut être amené à pivoter par un mécanisme de levier pendant un sertissage des connecteurs sur les guides d'ondes optiques (2) dans l'interstice entre la rondelle de pression (28) et la butée (24).

13. Outil selon l'une quelconque des revendications précédentes, **caractérisé en ce qu'**il est muni d'un ressort (46) qui est conçu et agencé de telle sorte qu'à la fermeture de la pince, il force le ou les connecteurs (40, 41) en direction d'un appui, en particulier d'un logement (24).

14. Outil selon l'une quelconque des revendications précédentes, **caractérisé en ce qu'**une rondelle de pression (128) est prévue qui présente au moins une collerette ou un épaulement axial(e) (53) servant de zone d'appui par rapport à la lame (29).

15. Outil selon l'une quelconque des revendications précédentes, **caractérisé en ce que** la lame (29) est mobile par rapport au dispositif de guidage (49), et **en ce qu'**un évidement (50) ou une fente est prévu(e), en particulier en direction du dispositif de guidage (24), dans lequel ou laquelle la lame (29) peut plonger pendant l'opération de découpe, et/ou **en ce que** le dispositif de guidage (49) présente au moins un ou plusieurs, en particulier un nombre de trous traversants (55, 56) ou de trous borgnes pour l'insertion des guides d'ondes optiques (2) qui correspond au nombre des guides d'ondes optiques (2) à découper.

16. Outil selon l'une quelconque des revendications précédentes, **caractérisé en ce que** les trous traversants (55, 56) sont configurés de telle sorte qu'ils s'élargissent en direction des extrémités libres des guides d'ondes optiques (2), de sorte que les guides d'ondes optiques (2) soient poussés de façon oblique lors de l'opération de découpe (2).
